# EUROPEAN PATENT APPLICATION

(11) **EP 2 466 422 A2**
(43) Date of publication of application: **20.06.2012**
(21) Application number: 11185400.6
(22) Date of filing: 17.10.2011
(51) Int. Cl.: G06F 3/023, G06F 3/048, G06F 3/01

(54) **Method of selecting a cell from an array**

(30) Priority: 20.10.2010 GB 201017661
(71) Applicant: Malvern Scientific Solutions Limited, Suckley Worcestershire WR6 5DR (GB)
(72) Inventor: Beale, Marc Ivor John, Suckley, Worcestershire WR6 5DR (GB)
(74) Representative: Jackson, Derek Charles

(57) **Abstract**

A method of selecting a cell (1) from an array (3) comprising the steps of: providing a first array (3) of sixteen cells (1) and selecting a second array (5) of four cells from the first array of sixteen cells; and selecting a single cell (1) from the second array of four cells.

## Description

This invention relates to a method of selecting a cell from an array.

It is known to provide special needs software designed for individuals with physical, cognitive or vision disabilities which includes an on-screen array, or grid, of options displayed in cells. The cells may be arranged in grids, or arrays, having a wide variety of formats.

Cells may be selected from a grid in a number of ways. In the case of special needs software, selection is conventionally by pointing, single-switch selection, or two-switch selection.

Pointing (or multiple switch) selection involves the use of a pointing device, such as a touchscreen, mouse, touchpad or gaze direction tracker, in order to select a cell. In effect, each cell has a separate switch. Thus, when typing with an on-screen keyboard, any letter can be selected directly by the user. However, while such a direct method of selection is efficient, it may be impossible for users with certain disabilities to use.

Single switch selection involves the use of a single switch which is first activated to cause the computer system to step through each of the cells of the grid in turn in sequence with a delay based on a timer. When a desired cell has been reached the switch is activated a second time to select the cell contents. This method requires a user to make a timed movement, which may be impossible for users with certain disabilities unless the delay at each cell is unacceptably long. This method of selection is much less efficient than selection by pointing directly at a desired cell. For example, with a one second delay at each cell selecting the 'z' when typing with an alphabetic on-screen keyboard would require a user to wait 26 seconds and then to make the required movement to activate the switch the second time within 1 second.

Two switch selection involves the use of two switches in which a first switch is repeatedly activated to step sequentially through the cells of a grid. A second switch is then activated when a desired cell has been reached. Two switches avoid the need for the user to make a timed movement, which can be difficult for users with certain disabilities, but requires more switch activations to be made. Thus, in the case of two switch selection, selecting the 'z' when typing with an on-screen alphabetical keyboard would require a user to activate the first switch 26 times before finally activating the second switch to select the cell containing the 'z' character.

Larger grids, for example a conventional on-screen keyboard with at least 26 cells, can be too complex for someone with a disability to select a desired cell. That is, each cell must necessarily be smaller than where a smaller grid is used and is therefore more difficult to select if the user has a physical disability. The symbol identifying each cell may be too small for someone with a visual disability to identify. Too many options may overwhelm someone with learning disabilities.

However, smaller grids lead to less efficient use, because more selections have to be made to achieve a goal.

It is therefore an object of the present invention to provide a method of selecting a cell from an array which overcomes the above disadvantages in that it provides reasonably sized cells, but does not require the use of an excessive number of selections to achieve a goal.

According to the present invention there is provided a method of selecting a cell from an array comprising the steps of: providing a first array of sixteen cells and selecting a second array of four cells from the first array of sixteen cells; and selecting a single cell from the second array of four cells.

Thus, by selecting one option from four possibilities twice over, the user is given sixteen options.

The cells of the first array and/or the cells of the second array may be contiguous.

The configuration of the first array may be selected from a 4 x 4 configuration and a 2 x 8 configuration.

The configuration of the second array may be selected from a 2 x 2 array, a row for four contiguous cells, and a column of four contiguous cells.

Selection may be effected by means of a switch, such as a physical switch or a virtual switch.

The switch may comprise an array of four switches separate from a screen display on which the first and second arrays are displayed, the arrangement of the switches being selected for example for a particular user. Alternatively, the switch may comprise a touchscreen on which an array of four switches is displayed. As a further alternative, a hand-position sensor may be configured to have four active areas providing the four switching actions.

The switches may be in a configuration selected from a 2 x 2 array, a diagonal arrangement, in the form of a column, and in the form of a row of four switches.

Where the switches are in a diagonal arrangement such that in the first step a top left switch selects a top left quadrant of a 4 x 4 array, an intermediate left switch selects a bottom left quadrant, an intermediate right switch selects an upper right quadrant of the array, and a bottom right switch selects a bottom right quadrant of the array, and in the second step the top left switch selects an upper left cell of the selected quadrant, the intermediate left switch selects a lower left cell of the quadrant, the intermediate right switch selects an upper right cell of the quadrant, and the bottom right switch selects a lower right cell of the quadrant.

As a further option, a gaze direction tracking system may be provided with four off-screen targets, for example located near the corners of the display. As a further alternative, a joystick may be used which provides four switch outputs, for example corresponding to the deflection to the four corner directions.

In yet another alternative, one or more separate position or tilt sensing accelerometers may be used (for example of the form used in mobile phones). In this latter case the switch can respond to one dimensional movement of the user's hand or head, for example side-to-side, with a central rest position and four locations which, when the user dwells on them, result in the four switching actions.

Where a joystick is used, for example as provided on some wheelchairs, an additional array of switches may be positioned on an existing joystick corresponding to four different directions of movement, thus allowing the wheelchair to be adapted to the present invention without the need for substantial modification.

Alternatively, switches may be incorporated into a headrest, for example for a wheelchair, in which case two switches may be provided, for example one switch to be positioned at each side of a user's head, each switch having two different outputs, for example depending on the length of time for which the switch is actuated. In this case, a short actuation of a left switch may provide a first switch action, a long actuation of the left switch may provide a second switch action, a short actuation of a right switch may provide a third switch action, and a long actuation of the right switch may provide a fourth switch action. For a 4 x 4 array, in the first step, the first switch action may select a top left quadrant of the array, the second switch action may select a bottom left quadrant, the third switch action may select a top right quadrant, and the fourth switch action may select a bottom right quadrant, and in the second step, the first switch action may select a top left cell of the selected quadrant, the second switch action may select a bottom left cell, the third switch action may select a top right cell, and the fourth switch action may select a bottom right cell.

For a better understanding of the present invention and to show more clearly how it may be carried into effect reference will now be made, by way of example, to the accompanying drawings in which:

Figure 1 illustrates a first step in a first embodiment of a method according to the present invention;

Figure 2 illustrates a second step in the first embodiment of a method according to the present invention;

Figure 3 illustrates a first step in a second embodiment of a method according to the present invention;

Figure 4 illustrates a second step in the second embodiment of a method according to the present invention;

Figure 5 shows an alternative arrangement of cells to that shown in Figures 1 to 4;

Figure 6 shows a 2 x 2 array of four switches which may be used to make selections within the arrays shown in Figures 1 to 5;

Figure 7 shows a diagonal array of four switches which may be used to make selections within the arrays shown in Figures 1 to 5;

Figure 8 shows a touchscreen on which an array of switches is displayed;

Figure 9 is a diagrammatic illustration of a joystick which can be used in the method of Figures 1 to 5;

Figure 10 is a diagrammatic illustration of a headrest which can be used in the method of Figures 1 to 5;

Figure 11 corresponds to Figure 1, except that a row of cells is selected in a first step rather than a quadrant; and

Figure 12 corresponds to Figure 1, except that a column of cells is selected in a first step rather than a quadrant.

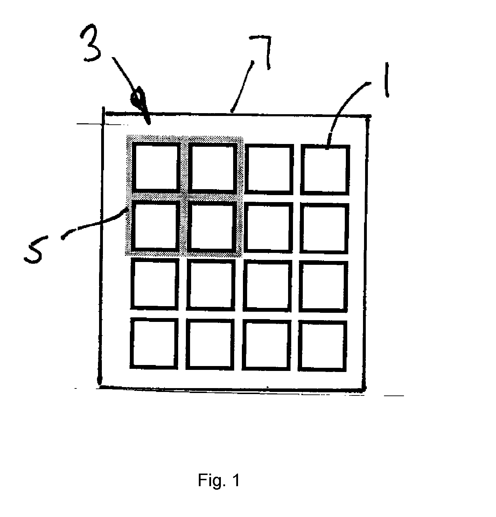

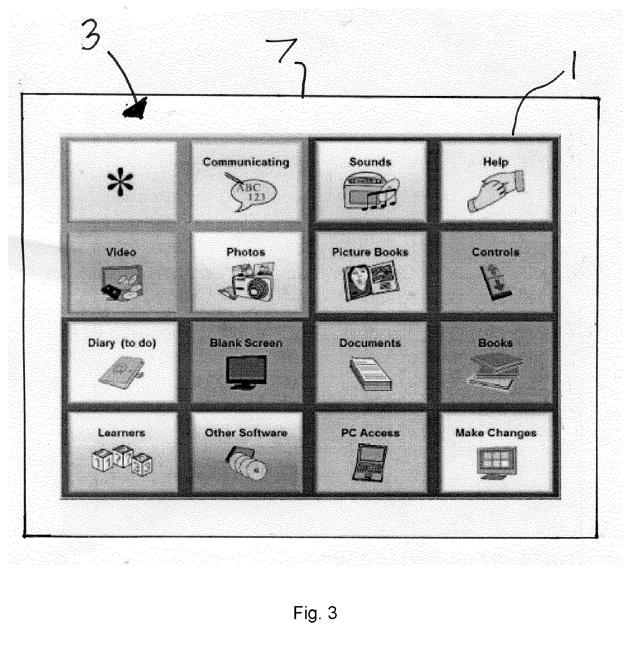

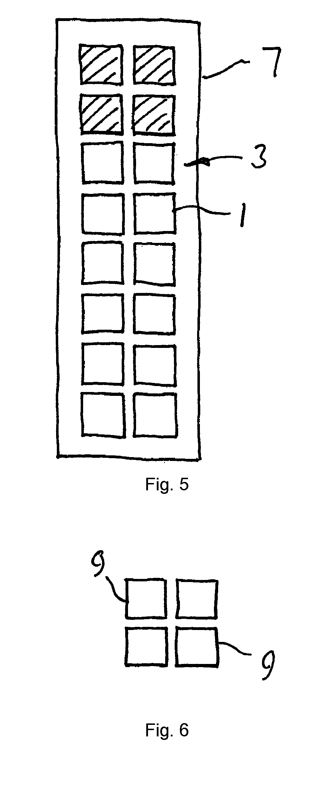

Figures 1 and 3 show sixteen substantially contiguous cells 1 arranged in a 4 x 4 array, or grid, 3 and displayed on a screen 7. In a first step the cells 1 are grouped into four 2 x 2 arrays 5 of four contiguous cells, as indicated by the top left group of four cells in Figure 1. Any one of the arrays 5 can be selected in a single action by a suitable selecting mechanism, such as a physical or virtual switch. Alternatively, as shown in Figure 5, the sixteen cells may be arranged in a 2 x 8 array.

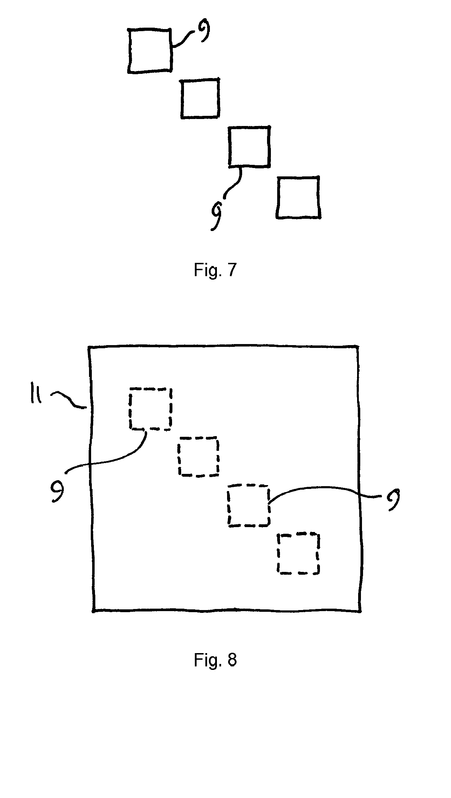

A physical switch may take a number of forms. For example, the switch may comprise an array of four switches 9 separate from the screen display, the arrangement of the switches being selected for a particular user, for example in a 2 x 2 array as shown in Figure 6 or in the form of a column or row of four switches. Preferably, as shown in Figure 7, the four switches 9 are arranged in a diagonal configuration such that, in a first step, the top left switch selects the top left quadrant of the 4 x 4 array, the intermediate left switch selects the bottom left quadrant, the intermediate right switch selects the upper right quadrant of the array, and the bottom right switch selects the bottom right quadrant of the array. In a second step, in each case in a single action, the top left switch selects the upper left cell of the selected 2 x 2 quadrant, the intermediate left switch selects the lower left cell of the quadrant, the intermediate right switch selects the upper right cell of the quadrant, and the bottom right switch selects the lower right cell of the selected 2 x 2 quadrant. Alternatively, the switch may comprise a touchscreen 11 on which the switches 9 are displayed. As a further alternative, a hand-position sensor may be configured to have four active areas providing the four switching actions. As a further option, a gaze direction tracking system may be provided with four off-screen targets, for example located near the corners of the display. As a further alternative, a joystick may be used which provides four switch outputs, for example corresponding to the deflection to the four corner directions. In yet another alternative, one or more separate position or tilt sensing accelerometers may be used (for example of the form used in mobile phones); in this case the sensor system can respond to one dimensional movement of the user's hand or head, for example side-to-side, with a central rest position and four locations which, when the user dwells on them, result in the four switching actions.

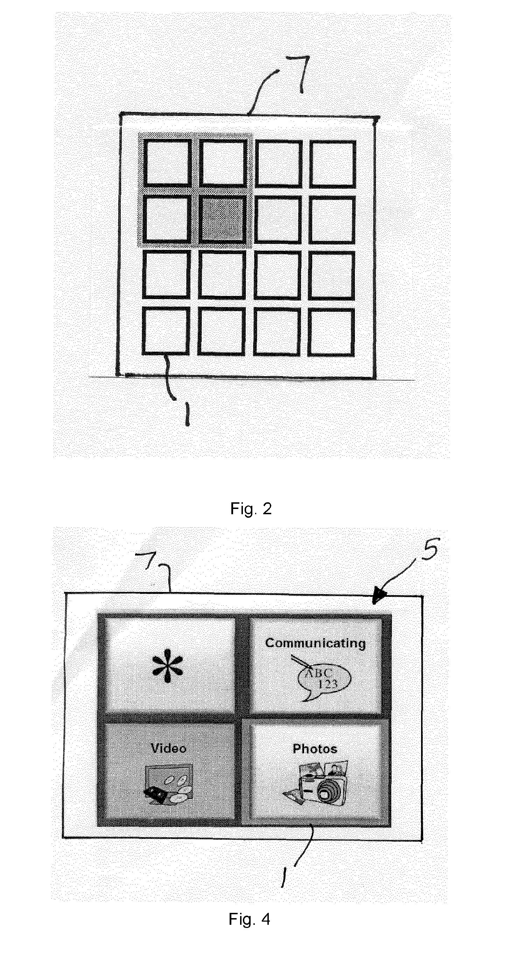

After one of the 2 x 2 arrays 5 has been selected, either the selected group may be highlighted to indicate the selection to the user as indicated in Figure 2, or the 2 x 2 array may be magnified to fill the space formerly occupied by the 4 x 4 array 3 as shown in Figure 4. The user can then operate the chosen physical or virtual switch to select one of the four cells in the 2 x 2 array.

Thus, the present invention allows the selection of a single option as indicated by the content of the chosen cell 1 from a total of sixteen options with only two operations, allowing the combination of efficient selection with cells that are of an acceptable size for users with a range of physical disabilities. Moreover, the arrangement of a 4 x 4 array in combination with four switches gives rise to a visually intuitive mapping such that selection of the desired cell is straightforward and readily accomplished by the user.

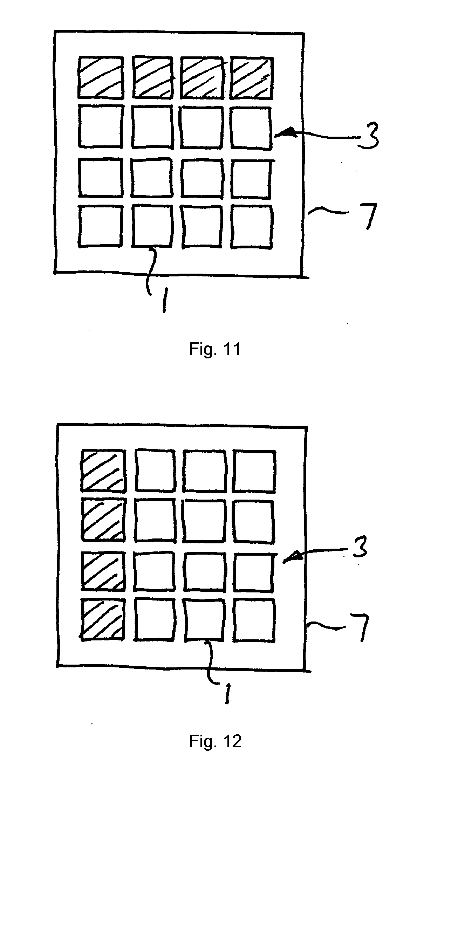

Although the present invention has been described above in the sense of selecting a 2 x 2 quadrant from a 4 x 4 array, as an alternative, as shown in Figure 11, the first step could involve the selection of a row of four cells 1 or, as shown in Figure 12, a column of four cells 1, the second step still being the selection of one of the four cells selected in the first step.

Although the present invention has been described above in the sense of a first step of selecting a 2 x 2 quadrant from a 4 x 4 array, as an alternative first step the array of sixteen cells could have an alternative configuration, such as a 2 x 8 array with a contiguous group of four cells being selected in the first stage (such as cells in a 2 x 2 array or four cells in a column or a row depending on the orientation of the 2 x 8 array), the second step still being the selection of one of the four cells selected in the first step.

These alternatives are linked by the requirement for a first step of selecting four contiguous cells from an array of sixteen cells and a second step of selecting one of the four contiguous cells selected in the first step. This two-stage selection can effectively be carried out by an arrangement of four physical or virtual switches.

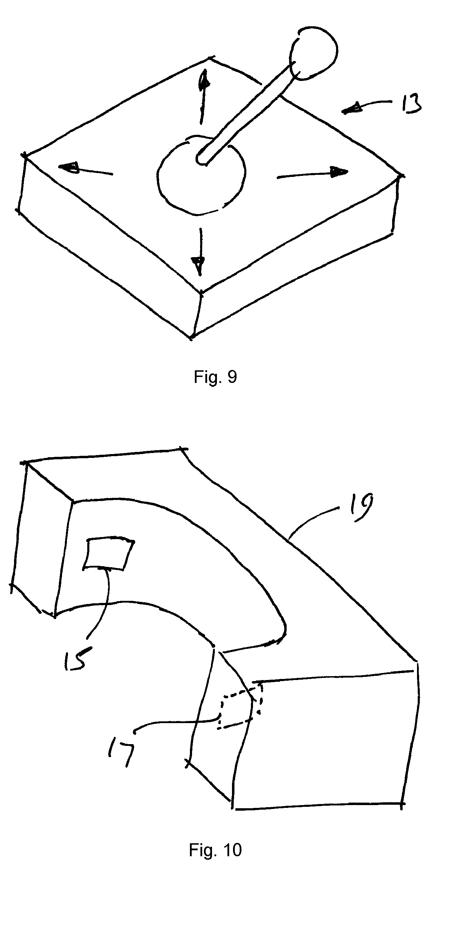

Where a joystick is used, such as the joystick 13 shown in Figure 9, all that is needed is an array of four switches, for example corresponding to the deflection to the four corner directions as illustrated by the arrows in Figure 9. That is, an analogue form of switch is not essential and there simply needs to be an on-off switch in each of the four directions of movement. The need only for simple on-off switches allows modification of an existing joystick controller, for example as provided on some wheelchairs, in which an additional array of switches is positioned on an existing joystick corresponding to four different directions of movement, thus allowing the wheelchair to be adapted to the present invention without the need for substantial modification.

Alternatively, a smaller number of switches may be used to make the selections within the array. For example, two switches may be provided, each switch having two different outputs depending on the length of time for which the switch is pressed. That is, a relatively short actuation will result in a first output, while a relatively long actuation will result in a second output. In this way, two switches can be used to select any desired cell in the array. Thus, in the case of a 4 x 4 array, two switches are provided, for example in the form of a left switch and a right switch (such as switches 15, 17 in a headrest 19 of a wheelchair as shown in Figure 10). The switch output may be such that a short actuation of the left switch may provide a first switch action, a long actuation of the left switch may provide a second switch action, a short actuation of the right switch may produce a third switch action, and a long actuation of the right switch may produce a fourth switch action. For the 4 x 4 array, in a first step, the first switch action may select the top left quadrant of the array, the second switch action may select the lower left quadrant, the third switch action may select the top right quadrant, and the fourth switch action may select the lower right quadrant of the array. In a second step selection is made of a cell within the previously selected quadrant and the first switch action may select the top left cell, the second switch action may select the bottom left cell, the third switch action may select the top right cell, and the fourth switch option may select the bottom right cell.

Clearly other arrangements are possible, and indeed would be required for a 2 x 8 array, for example.

The present invention provides efficient access that is also intuitive. Intuitive mapping is especially important for young children and for individuals with learning disabilities. As well as other functions, it is known, for example from W02007107700, that an array of sixteen cells can be used effectively for typing.

## Claims

1. A method of selecting a cell (1) from an array (3) comprising the steps of:
providing a first array (3) of sixteen cells (1) and selecting a second array (5) of four cells from the first array of sixteen cells; and selecting a single cell (1) from the second array (5) of four cells.

2. A method according to claim 1, wherein the cells (1) of at least one of the first and second arrays (3, 5) are contiguous, and optionally the cells of both the first and second arrays are contiguous.

3. A method according to claim 1 or 2, wherein the configuration of the first array (3) is selected from a 4 x 4 configuration and a 2 x 8 configuration.

4. A method according to any preceding claim, wherein the configuration of the second array (5) is selected from a 2 x 2 array, a row for four contiguous cells (1) and a column of four contiguous cells (1).

5. A method according to any preceding claim, wherein selection is effected by means of a switch (9, 11, 15, 17), such as selected from a physical switch and a virtual switch.

6. A method according to claim 5, wherein the switch comprises an array of four switches (9) separate from a screen display on which the first and second arrays (3, 5) are displayed.

7. A method according to claim 5, wherein the switch (9) comprises a touchscreen (11) on which an array of four switches (9) is displayed.

8. A method according to claim 5, wherein a hand-position sensor is configured to have four active areas providing four switching actions.

9. A method according to any one of claims 6 to 8, wherein the switches (9) are in a configuration selected from a 2 x 2 array, a diagonal arrangement, in the form of a column, and in the form of a row of four switches.

10. A method according to claim 9, wherein, when the switches (9) are in a diagonal arrangement, in the first step a top left switch selects a top left quadrant (5) of a 4 x 4 array (3), an intermediate left switch selects a bottom left quadrant (5), an intermediate right switch selects an upper right quadrant (5), and a bottom right switch selects a bottom right quadrant (5), and in the second step the top left switch selects an upper left cell (1) of the selected quadrant, the intermediate left switch selects a lower left cell (1), the intermediate right switch selects an upper right cell (1), and the bottom right switch selects a lower right cell (1) of the quadrant (5).

11. A method according to claim 5 or 6, wherein a gaze direction tracking system is provided with four off-screen targets, for example located near the corners of a display.

12. A method according to claim 5 or 6, wherein a joystick (13) is used which provides four switch outputs, for example corresponding to the deflection to the four corner directions.

13. A method according to claim 5, wherein switches (15, 17) are incorporated into a headrest (19), for example for a wheelchair, two switches (15, 17) being provided, one switch to be positioned at each side of a user's head, each switch having two different outputs, for example depending on the length of time for which the switch is actuated.

14. A method according to claim 13, wherein the two switches (15, 17) each have two different outputs depending on the length of time for which the switch is actuated, the arrangement being such that a short actuation of a left switch (17) provides a first switch action, a long actuation of the left switch (17) provides a second switch action, a short actuation of a right switch (15) provides a third switch action, and a long actuation of the right switch (15) provides a fourth switch action.

15. A method according to claim 14, wherein in a 4 x 4 array (3), in the first step, the first switch action selects a top left quadrant (5) of the array, the second switch action selects a bottom left quadrant (5), the third switch action selects a top right quadrant (5), and the fourth switch action selects a bottom right quadrant (5), and in the second step, the first switch action selects a top left cell (1) of the selected quadrant, the second switch action selects a bottom left cell (1), the third switch action selects a top right cell (1), and the fourth switch action selects a bottom right cell (1).
